# EUROPEAN PATENT APPLICATION

(11) **EP 2 484 840 A1**
(43) Date of publication of application: **08.08.2012**
(21) Application number: 10819880.5
(22) Date of filing: 21.09.2010
(51) Int. Cl.: E04B 1/76, E04B 1/80

(54) **REINFORCED POLYSTYRENE LAMINATE**

(30) Priority: 29.09.2009 CN 200920210334 U; 26.04.2010 CN 201010154840; 27.05.2010 CN 201010186233
(71) Applicant: Shanghai One Gold Energy-Saving Technology Co., Ltd., Shanghai 200235 (CN)
(72) Inventor: ZHOU, Jinlie, Shanghai 200235 (CN); ZHOU, Yue, Shanghai 200235 (CN)
(74) Representative: Clegg, Richard Ian
(86) International application number: PCT/CN2010/077179
(87) International publication number: WO 2011/038651

(57) **Abstract**

A reinforced polystyrene board, includes a grid reinforcer (2) arranged in a board surface of a polystyrene board, so as to improve a tensile strength and a folding strength of the polystyrene board, and the grid reinforcer (2) is made of a glass fiber grid, a metal grid, or a man-made fibers grid. A protective layer (3) of the polystyrene board arranged outside of the reinforcer isolates the reinforcer from an external environment, so as to improve the corrosion resistance and the durability of the reinforcer (2). An adopted optimal aperture of the reinforcer of a glass fiber grid is 7~15×7~15mm; an optimal thickness of the protective layer of polystyrene board (3) is 8~12mm. An adopted optimal aperture of the reinforcer of a metal grid is 10~30×10~30mm; an optimal thickness of the protective layer of polystyrene board (3) is 8∼30mm. An adopted optimal aperture of the reinforcer of a man-made fibers grid is 10×10~15×15mm, an optimal thickness of the protective layer (3) of the polystyrene board is 8~12mm. The reinforced polystyrene board is suitable for an external thermal insulation wall provided with the polystyrene board anchored by a mechanical fixing device, and can obviously improve the stability and the utilization security of an external thermal insulation layer, especially suitable for external thermal insulation energy saving engineering on conventional building walls.

## Description

### Background of the Present Invention

### Field of Invention

The present invention relates to a reinforced polystyrene board disposed in a surface layer thereof, and more particularly to an external thermal insulation wall provided with the polystyrene board anchored by a mechanical fixing device.

### Description of Related Arts

At present, a conventional polystyrene board is molded and shaped by a forming machine after being foamed. The conventional polystyrene board has the property of satisfying density and thermal conductivity, but has a low tensile strength and folding strength, and easily cracks, deforms or shrinks. When the polystyrene board is used for an external thermal insulation wall anchored by a mechanical fixing device, the anchored thermal insulation polystyrene board has problems and shortcomings of brittleness and easy breaking. So the polystyrene board needs improvement.

### Summary of the Present Invention

In order to overcome the shortcoming of low stability of a thermal insulation layer of an conventional polystyrene board anchored by a mechanical fixing device, the present invention provides a reinforced polystyrene board which is able to improve a tensile strength and a folding strength thereof, so as to enhance mechanical properties and whole stability of an external thermal insulation system of the polystyrene board.

A technical scheme adopted by the present invention is as follows. A two-dimensional grid reinforcer is disposed in a surface layer of a thermal insulation polystyrene board. The grid reinforcer is made of a glass fiber grid, a metal grid or a man-made fibers grid. A characteristic of the grid reinforcer is that a polystyrene board protective layer is disposed on an outer surface of the grid reinforcer, which isolates the grid reinforcer from an external environment of the polystyrene board, such as a thin layer of plastering mortar on the polystyrene board surface, and improves corrosion resistance and durability of the thermal insulation polystyrene board. A glass fiber grid reinforcer can be disposed in double sides or single side of the polystyrene board, according to requirement.

The glass fiber grid reinforcer is formed by knitting decussations of glass fiber warps and wefts. A distance between the grid apertures of the glass fiber grid reinforcer is 5∼25 × 5∼25mm, optimally 7∼15 × 7~15mm; a thickness of a polystyrene board protective layer of the reinforcer, i.e., a distance between the glass fiber grid reinforcer and an outer surface edge of the polystyrene board is 5~15mm, optimally 8~12mm.

The metal fiber grid reinforcer mentioned above is formed by electric welding decussations of longitudinal steel wires and transverse steel wires. A distance between the grid apertures of the metal fiber grid reinforcer is 5~60×5∼60mm, optimally 10~30× 10~30mm; the metal fiber grid reinforcer is hot-galvanized steel wire, cold drawn low carbon steel wire, stainless steel wire or alloy steel wire. A diameter of the steel wire is 0.5~4.0mm, optimally 0.9~2.5mm. A thickness of a metal fiber grid polystyrene board protective layer of the reinforcer is 5∼50mm, optimally 8∼30mm.

The man-made fibers grid mentioned above is formed by knitting decussations of man-made fibers warps and man-made fibers wefts. A distance between the grid apertures of the man-made fibers grid reinforcer is 5×5∼20×20mm, optimally 10× 10~15×15mm; a thickness of a polystyrene board protective layer of the man-made fibers grid reinforcer is 5~15mm, optimally 8~12mm.

By using a method that accomplishes compression molding the grid reinforcer and the polystyrene board at a time, the present invention disposes the grid reinforcer in the surface layer of the polystyrene board, so as to ensure the integrity and airtightness of the polystyrene board body that is inside or outside the grid reinforcer.

The present invention reinforced polystyrene board has the advantages as follows. Compared with a conventional polystyrene board, the reinforced polystyrene board significantly improves tensile strength and folding strength thereof. The present invention is suitable for an external thermal insulation wall of the polystyrene board anchored by a mechanical fixing device, and can solve a problem that the polystyrene board has the shortcomings of brittleness and easy breaking.

### Brief Description of the Drawings

Specific characteristics and properties of the present invention are further illustrated by preferred embodiments and drawings according to the preferred embodiments as follows.
Fig. 1 is a structure diagram of the present invention.
Fig. 2 is a longitudinal section diagram of Fig. 1.

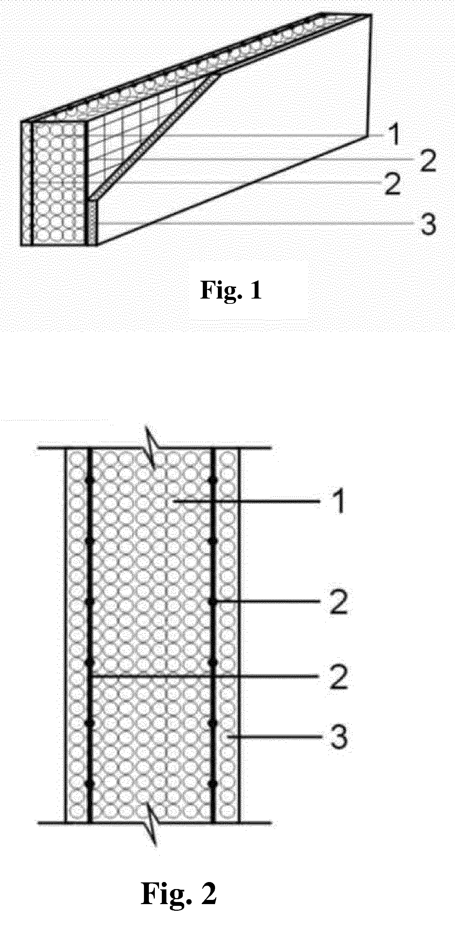

In Fig. 1 and Fig. 2, 1-polystyrene core board, 2-grid reinforcer,

### 3-a polystyrene board₋protective layer of the reinforcer.

### Detailed Description of the Preferred Embodiment

In Fig. 1 and Fig. 2, a reinforced polystyrene board according to the present invention from inside to outside sequentially consists of a polystyrene core board 1, a grid reinforcer 2 and a polystyrene board protective layer 3 of the reinforcer 2. The polystyrene board can be an expanded polystyrene board (EPS) or a rigid extruded polystyrene foam board (XPS). The grid reinforcer 2 is formed by knitting decussations of warps and wefts made of glass fiber or man-made fibers fabric, or by electric welding decussations of longitudinal steel wires and transverse steel wires. The polystyrene board protective layer 3 of the reinforcer 2 and the polystyrene core board 1 form an integral board, which isolates the grid reinforcer from an external environment, such as a thin layer of plastering mortar on the polystyrene board surface, and prevents the reinforcer from alkalization and corrosion.

## Claims

1. A reinforced polystyrene board, which is a thermal insulation polystyrene board consisting of a polystyrene board and a two-dimensional grid reinforcer layer disposed in a surface layer of the polystyrene board, wherein a polystyrene board protective layer is disposed on an outer surface of said two-dimensional grid reinforcer.

2. The reinforced polystyrene board as recited in claim 1, wherein said reinforcer is formed by knitting decussations of man-made fibers warps and wefts, and a distance between the grid apertures of the man-made fibers grid reinforcer is 5×5∼20×20mm, optimally 10×10~15×15mm.

3. The reinforced polystyrene board as recited in claim 1, wherein a thickness of said polystyrene board protective layer is 5~15mm, optimally 8~12mm; and said polystyrene board protective layer and said polystyrene core board form an integral board.

4. A metal grid reinforced polystyrene board, which is a thermal insulation polystyrene board consisting of a polystyrene board and a two-dimensional metal grid reinforcer disposed in a surface layer of said polystyrene board, wherein a polystyrene board protective layer is disposed on an outer surface of said two-dimensional grid reinforcer.

5. The metal grid reinforced polystyrene board as recited in claim 4, wherein a metal fiber grid reinforcer is formed by electric welding decussations of longitudinal steel wires and transverse steel wires, a distance between the grid apertures of said metal fiber grid reinforcer is 5~60×5∼60mm, optimally 10~30×10~30mm, said metal fiber grid reinforcer is a hot-galvanized steel wire, a cold drawn low carbon steel wire, a stainless steel wire or an alloy steel wire, and a diameter of the steel wire is 0.5~4.0mm, optimally 0.9~2.5mm.

6. The metal grid reinforced polystyrene board as recited in claim 4, wherein a thickness of said polystyrene board protective layer is 5∼50mm, optimally 8∼30mm; and said polystyrene board protective layer and said polystyrene core board form an integral board.

7. A glass fiber grid reinforced polystyrene board, which is a thermal insulation polystyrene board consisting of a polystyrene board and a two-dimensional glass grid reinforcer disposed in a surface layer of said polystyrene board, wherein a polystyrene board protective layer is disposed on an outer surface of said two-dimensional grid reinforcer.

8. The glass fiber grid reinforced polystyrene board as recited in claim 7, wherein said reinforcer is formed by knitting decussations of a man-made fibers warps and wefts, and a distance between the grid apertures of the man-made fibers grid reinforcer is 5∼25 ×5∼25mm, optimally 7~15×7~15mm; a glass fiber grid reinforcer is disposed in double sides or single side of the polystyrene board.

9. The glass fiber grid reinforced polystyrene board as recited in claim 7, wherein a thickness of said polystyrene board protective layer is 5~15mm, optimally 8~12mm; and said polystyrene board protective layer and said polystyrene core board form an integral board.
